# EUROPEAN PATENT APPLICATION

(11) **EP 2 642 432 A1**
(43) Date of publication of application: **25.09.2013**
(21) Application number: 11841729.4
(22) Date of filing: 13.09.2011
(51) Int. Cl.: G06Q 10/00

(54) **BEHAVIOR INFORMATION GATHERING DEVICE AND BEHAVIOR INFORMATION TRANSMISSION DEVICE**

(30) Priority: 15.11.2010 JP 2010254884
(71) Applicant: NEC Corporation, Tokyo 108-8001 (JP)
(72) Inventor: FURUKAWA, Ryo, Tokyo 108-8001 (JP)
(74) Representative: Vossius & Partner
(86) International application number: PCT/JP2011/070808
(87) International publication number: WO 2012/066842

(57) **Abstract**

A user is enabled to control the analysis accuracy of preference information obtained by analyzing behavior information collected by a service provider. A temporary identifier of a user, a group identifier of the user, and behavior information of the user are stored in a behavior information storage unit, a group identifier is assigned to a group of temporary identifiers corresponding to behavior information for which preference information matches regarding the temporary identifier and the behavior information stored in the behavior information storage unit, the group identifier and the preference information are stored in a group information storage unit in association with each other, and, for each group identifier stored in the behavior information storage unit, a group list including a plurality of temporary identifiers corresponding to the group identifier, a plurality of group identifiers assigned to the plurality of temporary identifiers, and a plurality of pieces of preference information corresponding to the plurality of group identifiers is transmitted.

## Description

### BACKGROUND

The present invention relates to a behavior information collection device and a behavior information transmission device.

An information distribution system that selects distribution information based on behavior information indicating the behavior of a user and transmits the selected distribution information to a user terminal of the user is known (for example, see Patent Document 1). The behavior information is, for example, position information indicating the position of the user terminal or purchase information indicating a product purchased by the user.

A server device included in the information distribution system has a registrant file in which the user holding the user terminal is registered, a purchase history file in which the purchase history is collected, a position information file (behavior pattern file) in which the behavior of a registrant is collected using a global positioning system (GPS), and an advertisement request file including distribution information indicating an advertisement. The server device extracts the registrant as a subject for transmission of the distribution information indicating the advertisement based on the purchase history file, the behavior pattern file, and the advertisement request file.

The information distribution system enables the distribution information that is appropriately selected based on the purchase history of the user and the behavior of the user to be transmitted the user terminal (i.e., "personalized service" to be provided).

Patent Document 1: Patent Publication JP-A-2003-250713

By collecting the behavior information of a user as in the information distribution system described in Patent Document 1, it is possible to analyze preference information of the user in detail. The preference information is the tendency of user behavior, and an analysis of the preference information is, for example, analyzing the genre (such as fashion, interiors, computers, or games) of products preferred by the user in the case where a product purchase record of the user is obtained as the behavior information.

Also, by continuing to collect the behavior information over a long period, the analysis accuracy of the preference information can be improved. An example of a conceivable case is where it can be analyzed merely that there is an interest in "soccer" with the behavior information for one week, whereas it is possible to analyze that there is an interest in a "particular soccer team" by collecting the behavior information for one month.

However, even in the case where providing the behavior information is permitted, it is rare that the user performs the provision of the behavior information understanding that the preference information is analyzed in detail as a result. Therefore, there arises a problem in that the preference information of the user is analyzed in detail without permission of the user. For example, in the case where one does not mind being known about an interest in "soccer" but does not want to be known about an interest in a "particular soccer team," the user is not enabled to prevent the preference information from being analyzed in detail.

That is, the user cannot control the analysis accuracy of the preference information obtained by analyzing one's behavior information. The reason for this is that the user does not have a choice but to provide the behavior information for a service in order to enjoy the service, and the analysis accuracy of the preference information is controllable by a service provider if the behavior information of the user is accumulated by the service provider over a long period.

### SUMMARY

The present invention has been made in view of such circumstances and has an object of enabling user control of the analysis accuracy of preference information obtained by analyzing behavior information collected by a service provider.

A behavior information collection device according to one aspect of the present invention a behavior information reception unit configured to receive, from a user terminal, a temporary identifier which is a temporary identifier of a user, a group identifier for identifying a group according to a preference of the user, and behavior information indicating a behavior of the user; a behavior information storage unit configured to store the temporary identifier, the group identifier, and the behavior information received by the behavior information reception unit in association with each other; a group information storage unit configured to store the group identifier and preference information showing a tendency of behavior of a user in association with each other; a user information storage unit configured to store a user identifier which is an identifier of a user and a group identifier of a group to which the user belongs in association with each other; a grouping unit configured to, regarding the temporary identifier and the behavior information stored in the behavior information storage unit, assign a group identifier to a group of temporary identifiers corresponding to behavior information for which preference information matches, and store the group identifier and the preference information in the group information storage unit in association with each other; a group list transmission unit configured to acquire, for each group identifier stored in the behavior information storage unit, a user identifier of a user associated with the group identifier from the user information storage unit and transmit to a user terminal of the user shown by the user identifier, a group list including a plurality of temporary identifiers corresponding to the group identifier, a plurality of group identifiers assigned to the plurality of temporary identifiers, and a plurality of pieces of preference information corresponding to the plurality of group identifiers; a selected group reception unit configured to receive selected group information that is transmitted from the user terminal in accordance with transmission of the group list and includes the user identifier and the group identifier; and a group update unit configured to update the group identifier stored in the user information storage unit based on the user identifier and the group identifier included in the selected group information.

Also, a behavior information transmission device according to one aspect of the present invention includes: a temporary identifier generation unit configured to generate a temporary identifier which is a temporary identifier of a user; an identifier storage unit configured to store an identifier of the user, the temporary identifier of the user, and a group identifier for identifying a group according to a preference of the user in association with each other; a behavior information storage unit configured to store behavior information indicating a behavior of the user; a behavior information transmission unit configured to transmit, to a behavior information collection device, the behavior information stored in the behavior information storage unit after this behavior information is associated with the temporary identifier and the group identifier stored in the identifier storage unit; a group list reception unit configured to receive, from the behavior information collection device, a group list including a group identifier of a plurality of groups into which the group a user currently belongs to is divided, a plurality of temporary identifiers corresponding to the plurality of groups, and a plurality of pieces of preference information indicating a preference in the plurality of groups; a group selection unit configured to select, according to a user input, which one of a group identifier stored in the identifier storage unit and a group identifier corresponding to the temporary identifier stored in the identifier storage unit out of the plurality of group identifiers included in the group list is to be a group identifier of a group to which a user belongs and update a group identifier stored in the identifier storage unit to the selected group identifier; and a selected group transmission unit configured to transmit the group identifier selected by the group selection unit and the user identifier stored in the identifier storage unit to the behavior information collection device in association with each other,

Note that, in the present invention, a "unit" does not merely refer to physical means but includes cases where a function of the "unit" is realized through software. Also, it may be such that a function of one "unit" or device is realized by two or more physical means or devices or functions of two or more "units" or devices are realized by one physical means or device.

With the present invention, user control of the analysis accuracy of preference information obtained by analyzing behavior information collected by a service provider is possible.

### DESCRIPTION OF THE DRAWINGS

FIG. 1 is a diagram showing a configuration example of an information processing system in one embodiment of the present invention.
FIG. 2 is a diagram showing one example of information stored in an ID storage unit.
FIG. 3 is a diagram showing one example of behavior information stored in a behavior information storage unit.
FIG. 4 is a diagram showing one example of information stored in a behavior information storage unit.
FIG. 5 is a diagram showing one example of information stored in a user information storage unit.
FIG. 6 is a diagram showing one example of information stored in a group information storage unit.
FIG. 7 is a diagram showing one example of information stored in a preference vector storage unit.
FIG. 8 is a diagram showing one example of information stored in a content storage unit.
FIG. 9 is a flowchart showing the overall flow of processing in the information processing system.
FIG. 10 is a flowchart showing the details of steps (S901 and S902) shown in the flowchart in FIG. 9.
FIG. 11 is a flowchart showing the details of a step (S903) shown in the flowchart in FIG. 9.
FIG. 12 is a diagram showing one example of the correspondence relationship of a temporary ID and a preference vector.
FIG. 13 is a diagram showing one example of the correspondence relationship of a new group ID and a temporary ID.
FIG. 14 is a diagram showing one example of information stored in the group information storage unit.
FIG. 15 is a flowchart showing the details of a step (S904) shown in the flowchart in FIG. 9.
FIG. 16 is a diagram showing one example of information input to a regroup unit.
FIG. 17 is a diagram showing one example of a new group list.
FIG. 18 is a flowchart showing the details of steps (S905 to S907) shown in the flowchart in FIG. 9.
FIG. 19 is a diagram showing one example of information stored in the ID storage unit.
FIG. 20 is a diagram showing one example of information stored in the user information storage unit.
FIG. 21 is a flowchart showing one example of an operation in which content is distributed with respect to a user terminal by a server based on a preference vector attached to a group ID.

### DETAILED DESCRIPTION

One embodiment of the present invention will be described below with reference to the drawings.

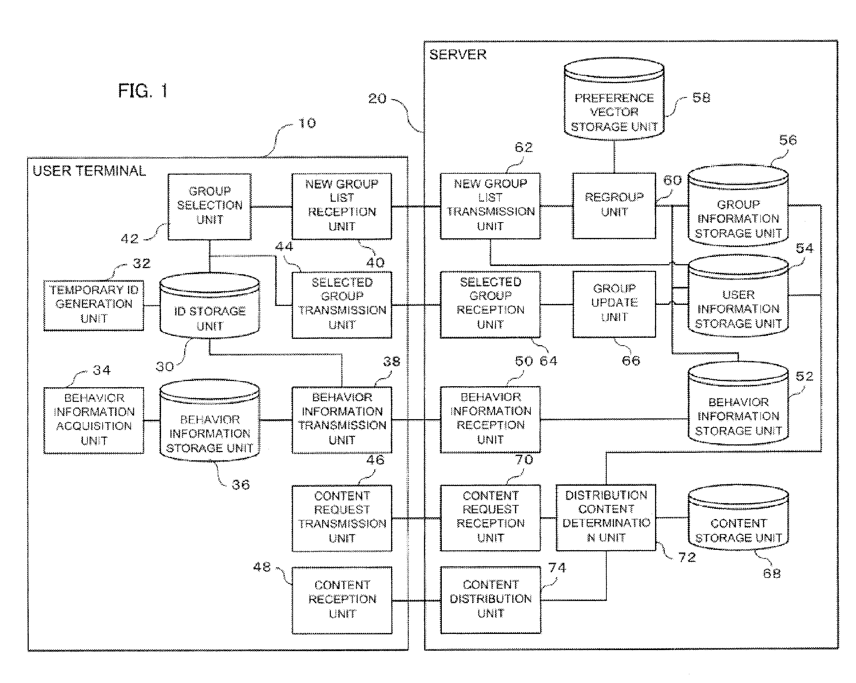

FIG. 1 is a diagram showing a configuration example of an information processing system in one embodiment of the present invention. The information processing system is configured to include a user terminal 10 and a server 20. The user terminal 10 and the server 20 are both information processing devices including a CPU, a processor, a memory, a storage device, or the like. Note that although only one user terminal 10 is illustrated in FIG. 1, the server 20 is connected to be communicable with a plurality of the user terminals 10 via a network such as, for example, the Internet. Also, the user terminal 10 is capable of communicating with an information processing device (for example, a server for online shopping) other than the server 20 via a network such as, for example, the Internet.

In the information processing system, the server 20 collects behavior information indicating the behavior of a user from the user terminal 10 and analyzes preference information of each user based on the collected behavior information. Then, grouping of users is performed based on an analysis result of the preference information, and content according to a group to which the user belongs is distributed to the user terminal.

As shown in FIG. 1, the user terminal 10 is configured to include an ID storage unit 30, a temporary ID generation unit 32, a behavior information acquisition unit 34, a behavior information storage unit 36, a behavior information transmission unit 38, a new group list reception unit 40, a group selection unit 42, a selected group transmission unit 44, a content request transmission unit 46, and a content reception unit 48. Note that each unit of the user terminal 10 can be realized by using a storage area such as a memory or a storage device or by the CPU executing a program stored in the storage area.

The ID (identifier) storage unit 30 associates a user ID, a group ID of a group to which the user belongs, and a temporary ID that is used temporarily with one another before and storing the same. Herein, the group shows the preference of the user. For example, an initial group may be selected by the user to fit one's preference from among a plurality of groups. Alternatively, for example, an initial group ID may be given with respect to the user from the server 20. Also, the temporary ID is an ID that is used instead of the user ID when the user transmits the behavior information to the server 20. Note that the server 20 holds information showing the correspondence relationship of the user ID and the user but does not hold information regarding which user the temporary ID is showing.

The temporary ID generation unit 32 generates and stores, in the ID storage unit 30, the temporary ID of the user. For example, the temporary ID generation unit 32 accepts an arbitrary string from the user and generates the temporary ID based on that string. In this embodiment, the temporary ID generation unit 32 uses, as the temporary ID, a 128-bit hash value generated by inputting the accepted string to the Message Digest Algorithm 5 (MD5) hash function. Note that the temporary ID generation unit 32 can regularly update the temporary ID stored in the ID storage unit 30. For example, the temporary ID generation unit 32 can newly accept a string from the user and update the temporary ID based on that string every time a predetermined period has elapsed or every time the number of times of logins by the user reaches a predetermined number of times.

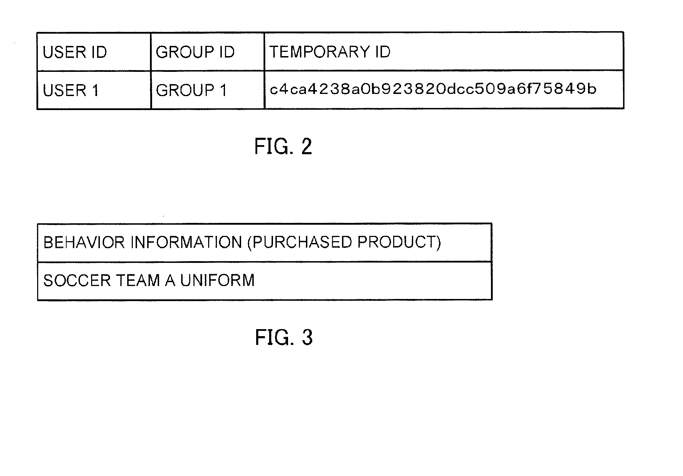

FIG. 2 is a diagram showing one example of information stored in the ID storage unit 30. Note that a value "c4ca4238a0b923820dcc509a6f75849b" set as the temporary ID is obtained by applying the MD5 hash function with respect to a string "1 accepted from the user.

Returning to FIG. 1, the behavior information acquisition unit 34 acquires and stores, in the behavior information storage unit 36, the behavior information of the user. Note that the behavior information is information indicating the behavior of the user and is, for example, product purchase information or viewing history information. Specifically, for example, the behavior information acquisition unit 34 can monitor the access history of a web browser to acquire the product purchase information and store the acquired product purchase information as the behavior information in the behavior information storage unit 36. FIG. 3 shows one example of the behavior information stored in the behavior information storage unit 36 in the case where "soccer team A uniform" has been able to be acquired as the product purchase information.

With the behavior information transmission unit 38, the behavior information stored in the behavior information storage unit 36 is associated with the group ID and the temporary ID stored in the ID storage unit 30 and transmitted to the server 20. That is, the behavior information transmission unit 38 can transmit the behavior information to the server 20 with a pseudonym for the user by using not the user ID but the group ID and the temporary ID. Note that the timing at which the behavior information transmission unit 38 transmits the behavior information may be an arbitrary timing. For example, the behavior information transmission unit 38 may transmit the behavior information at a timing at which an addition of the behavior information to the behavior information storage unit 36 has been detected or may transmit the behavior information at a predetermined timing.

The new group list reception unit 40 receives a new group list including the group ID of a group into which the group the user currently belongs to is divided, a preference vector (preference information) that is information showing the preference in the divided group, and the temporary ID classified into the divided group. The new group list is generated by the server 20 based on the behavior information from the user.

The group selection unit 42 selects the group to which the user belongs from the group ID stored in the ID storage unit 30 and the group ID associated with the temporary ID stored in the ID storage unit 30 out of the group IDs included in the new group list. For example, the group selection unit 42 displays the preference vector of the group associated with the temporary ID on a screen and accepts a selection from the user on whether to accept a change to the group of this preference vector. When the user makes a selection to accept the change to the new group, the group selection unit 42 updates the group ID stored in the ID storage unit 30 to a new group ID. Note that, when the user makes a selection not to accept the change to the new group, the group ID stored in the ID storage unit 30 is not updated.

With the selected group transmission unit 44, the group ID selected by the group selection unit 42 is associated with the user ID stored in the ID storage unit 30 and transmitted to the server 20.

The content request transmission unit 46 transmits, to the server 20, a request for content that is personalized based on the preference of the user. Note that the request for content includes the user ID or the group ID as information for identifying the group to which the user belongs. Note that a content request may be transmitted to the server 20 by an explicit operation by the user or may be transmitted to the server 20 regardless of user intent.

The content reception unit 48 receives content distributed from the server 20 according to the content request. The received content is reproduced in the user terminal 10 using, for example, a web browser or a media player.

Also, the server 20 is configured to include a behavior information reception unit 50, a behavior information storage unit 52, a user information storage unit 54, a group information storage unit 56, a preference vector storage unit 58, a regroup unit 60, a new group list transmission unit 62, a selected group reception unit 64, a group update unit 66, a content storage unit 68, a content request reception unit 70, a distribution content determination unit 72, and a content distribution unit 74. Note that each unit of the server 20 can be realized by using a storage area such as a memory or a storage device or by the CPU executing a program stored in the storage area.

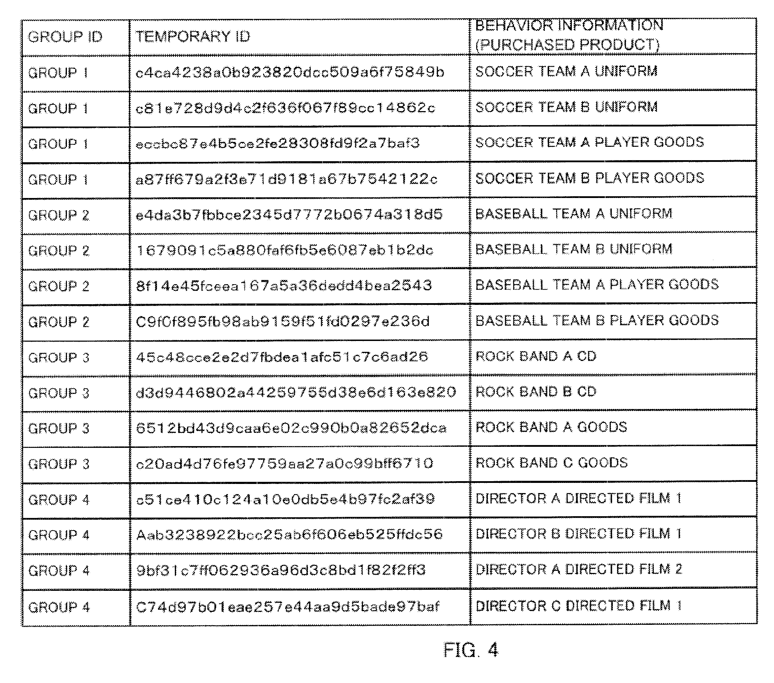

With the behavior information reception unit 50, the behavior information associated with the group ID and the temporary ID is received from the user terminal 10 and stored in the behavior information storage unit 52. FIG. 4 is shows one example of information stored in the behavior information storage unit 52. As shown in FIG. 4, the group ID and the temporary ID are given to each piece of the behavior information. In this manner, each piece of the behavior information is stored in a pseudonym in the behavior information storage unit 52, since the user cannot be distinguished by the temporary ID in the server 20.

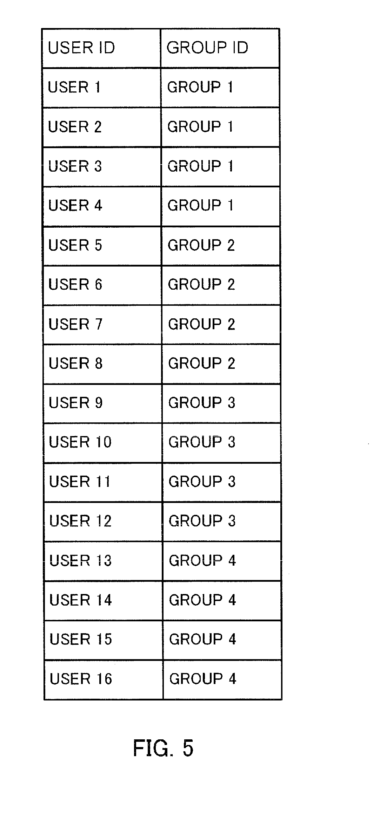

The user information storage unit 54 stores information relating to the group to which the user belongs. Specifically, the user information storage unit 54 associates the user ID and the group ID with each other and stores the same. FIG. 5 shows one example of information stored in the user information storage unit 54.

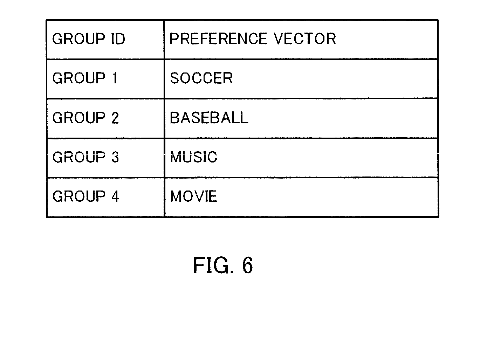

The group information storage unit 56 stores the preference vector that is information showing the preference in each group. Specifically, the group information storage unit 56 associates the group ID and the preference vector with each other and stores the same. FIG. 6 shows one example of information stored in the group information storage unit 56.

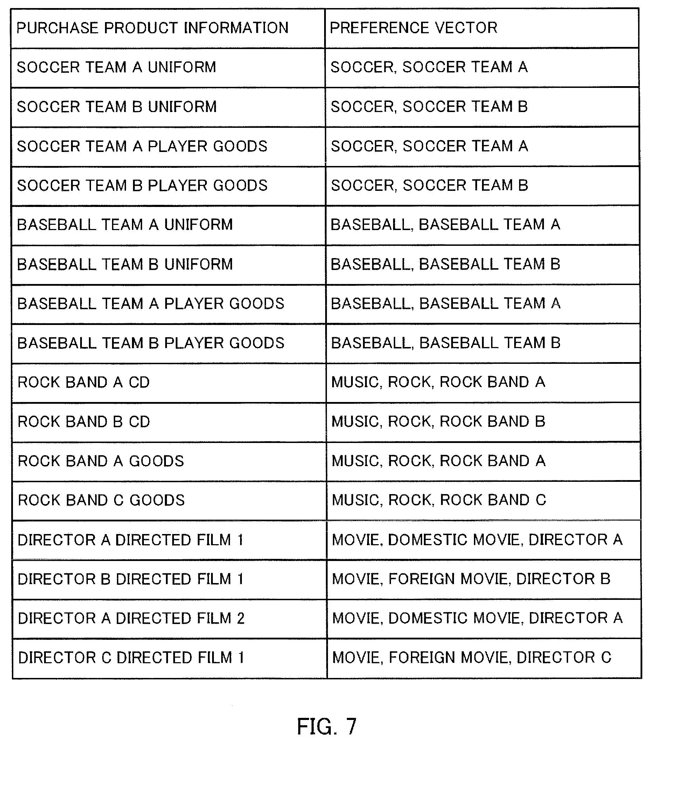

The preference vector storage unit 58 stores information showing the correspondence relationship of the behavior information and the preference vector. FIG. 7 shows one example of information stored in the preference vector storage unit 58. In the example in FIG. 7, behavior information of purchasing a "soccer team A uniform" is associated with a preference vector of {soccer, soccer team A}, for example. That is, based on the information shown in FIG. 7, a user who purchases a uniform for soccer team A is determined as having an interest in soccer and as having an interest in the soccer team A in particular.

The regroup unit 60 generates a new group having a preference vector with higher accuracy through analysis of the behavior information stored in the behavior information storage unit 52. A generating method for the new group will be described later using a specific example.

The new group list transmission unit 62 transmits a list of groups newly generated by the regroup unit 60. This group list includes temporary IDs of a plurality of users belonging to the current group of the user, the group ID of the group newly generated for these users, and the preference vector corresponding to the generated group.

The selected group reception unit 64 receives a combination of the user ID and the group ID transmitted from the user terminal 10 according to the new group list.

The group update unit 66 updates, based on the information received by the selected group reception unit 64, the group ID of the group to which each user belongs that is stored in the user information storage unit 54.

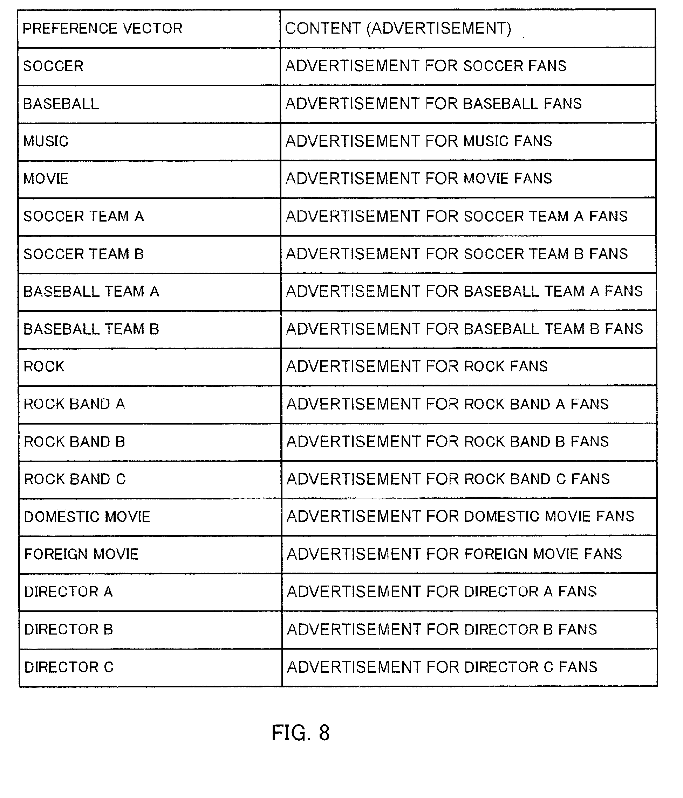

The content storage unit 68 stores content that is classified according to the preference of the user. Specifically, the content storage unit 68 associates the preference vector and the content with each other and stores the same. FIG. 8 shows one example of information stored in the content storage unit 68. For example, preference vector "soccer" is associated with "advertisement for soccer fans" as content. Note that the content itself may be stored or a storage location (for example, a URL) of the content may be stored in the content storage unit 68. Also, although one piece of content is associated with each preference vector in the example in FIG. 8, a plurality of pieces of content may be associated with respect to each preference vector.

The content request reception unit 70 receives the content request transmitted from the user terminal 10.

The distribution content determination unit 72 determines, based on the received content request, content according to the preference of the user out of content stored in the content storage unit 68.

The content distribution unit 74 distributes the content determined by the distribution content determination unit 72 to the user terminal 10.

Processing by the information processing system including the user terminal 10 and the server 20 will be described below.

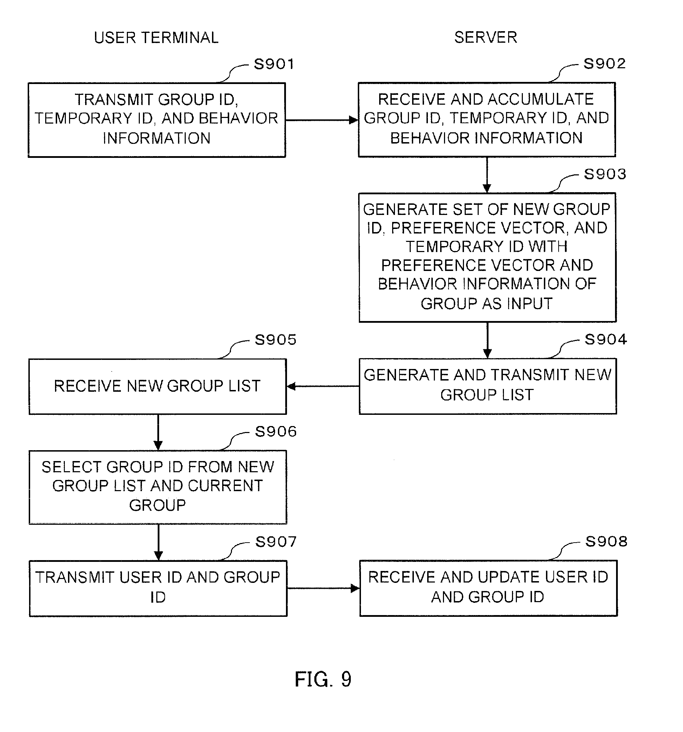

FIG. 9 is a flowchart showing the overall flow of the processing in the information processing system.

First, the behavior information transmission unit 38 of the user terminal 10 transmits the group ID, the temporary ID, and the behavior information (S901).

The group ID, the temporary ID, and the behavior information transmitted from the user terminal 10 are received and accumulated in the behavior information storage unit 52 by the behavior information reception unit 50 of the server 20 (S902).

Based on the group ID and the preference vector stored in the group information storage unit 56 and the group ID, the temporary ID, and the behavior information stored in the behavior information storage unit 52, the regroup unit 60 of the server 20 groups temporary IDs by further similar tendencies in the behavior information of the user within a group, assigns a new group ID to that group, and generates a set of the preference vector and the temporary ID attached to that new group ID (S903). Note that any method may be used for a method of grouping and a method of preference vector calculation.

With the new group list transmission unit 62 of the server 20, a combination of at least the new group ID and the preference vector to be transmitted, in consideration of the relationship of the group ID attached to the user ID stored in the user information storage unit 54 and the new group ID, to the user terminal 10 of that user ID is listed for each user ID and transmitted as the new group list (S904).

The new group list reception unit 40 of the user terminal 10 receives the new group list transmitted from the server 20 (S905). The group selection unit 42 selects the group ID of the group to which the user is to belong according to, for example, a user operation, from the group ID corresponding to the current temporary ID out of the group IDs included in the new group list and the current group ID. The selected group transmission unit 44 transmits the group ID selected by the group selection unit 42 and the user ID to the server 20 (S907).

Finally, the selected group reception unit 64 of the server 20 receives the user ID and the group ID transmitted by the user terminal 10, and the group update unit 66 stores that user ID and group ID in the group information storage unit 56 (S908).

Next, the details of the processing shown in the flowchart in FIG. 9 will be described with a specific example.

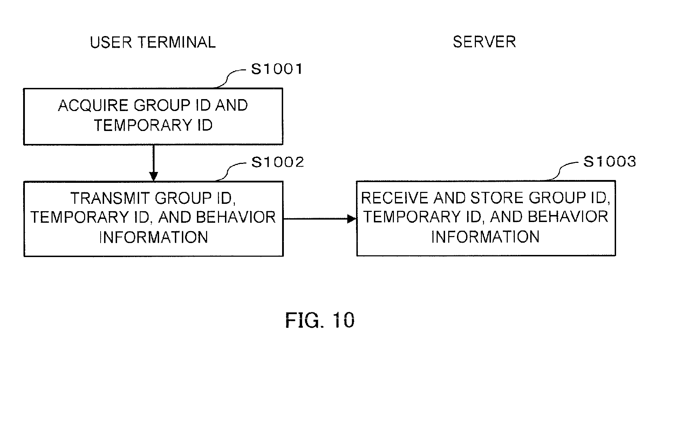

FIG. 10 is a flowchart showing the details of steps (S901 and S902) shown in the flowchart in FIG. 9.

The behavior information transmission unit 38 of the user terminal 10 acquires the group ID and the temporary ID from the ID storage unit 30 (S1001). For example, in the case where the information stored in the ID storage unit 30 is in a state shown in FIG. 2, "group 1" as the group ID and "c4ca4238a0b923820dcc509a6f75849b" as the temporary ID are acquired.

Subsequently, the behavior information is acquired from the behavior information storage unit 36, and the acquired behavior information is associated with the group ID and the temporary ID and transmitted to the server 20 by the behavior information transmission unit 38 (S1002). For example, in the case where the information stored in the behavior information storage unit 36 is in a state shown in FIG. 3, behavior information "soccer team A uniform" is acquired as information. Then, together with the already acquired group ID and temporary ID, a combination of ("group 1," "c4ca4238a0b923820dcc509a6f75849b," and "soccer team A uniform") is transmitted to the server 20.

Then, the group ID, the temporary ID, and the behavior information transmitted from the user terminal 10 are received and stored in the behavior information storage unit 52 by the behavior information reception unit 50 of the server 20 (S1003). When the behavior information is collected from each user, the information stored in the behavior information storage unit 52 is as shown in FIG. 4, for example.

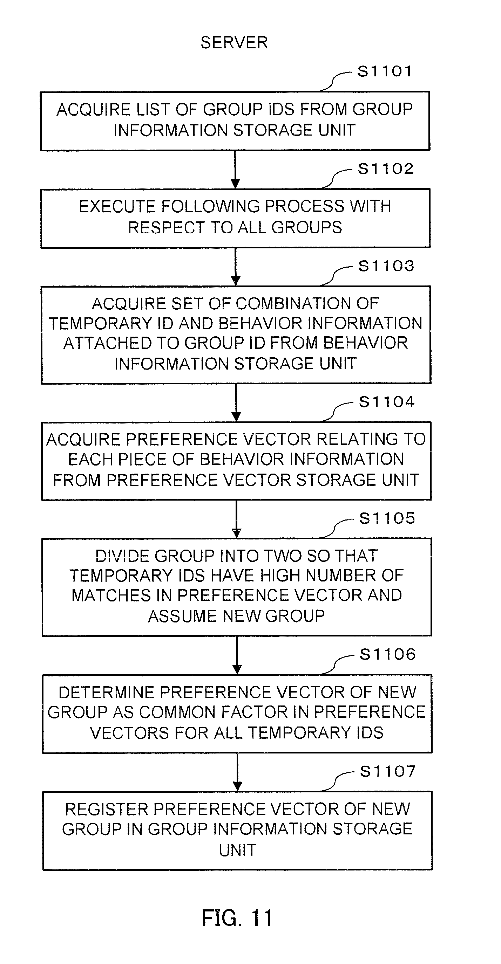

FIG. 11 is a flowchart showing the details of a step (S903) shown in the flowchart in FIG. 9. Note that, in this embodiment, the new group ID is generated by a method of dividing a group into two according to the behavior information.

First, the regroup unit 60 acquires the list of the group IDs from the group information storage unit 56 (S1101). For example, in the case where the information stored in the group information storage unit 56 is in a state shown in FIG. 6, {"group 1," "group 2," "group 3," "group 4} is acquired as the list of the group IDs.

Then, the regroup unit 60 executes the following steps (S1103 to S1106) for all group IDs (S1102). Note that a specific example for "group 1" will be described below.

The regroup unit 60 acquires, from the behavior information storage unit 52, a set of combinations of the temporary ID and the behavior information attached to the group ID to be subjected to processing (S1103). For example, in the case where the information stored in the behavior information storage unit 52 is in a state shown in FIG. 4 and the group ID to be subjected to processing is "group 1," {(c4ca4238a0b923820dcc509a6f75849b, soccer team A uniform), (c81 e728d9d4c2f636f067f89cc14862c, soccer team B uniform), (eccbc87e4b5ce2fe28308fd9f2a7baf3, soccer team A player goods), (a87ff679a2f3e71 d9181 a67b7542122c, soccer team B player goods)} is acquired.

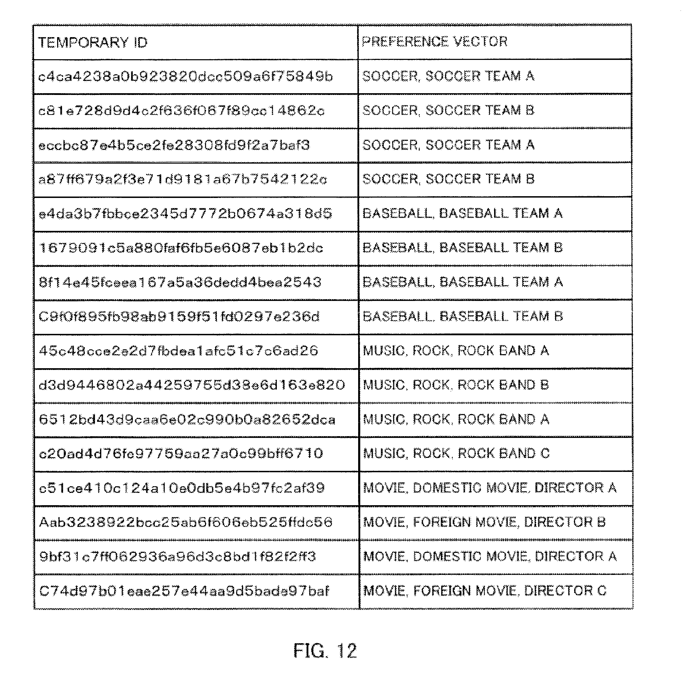

Next, the regroup unit 60 acquires a set of the preference vector relating to each piece of the behavior information from the preference vector storage unit 58 (S1104). For example, in the case where the information stored in the preference vector storage unit 58 is in a state shown in FIG. 7, a set of the preference vector {soccer, soccer team A} is acquired with the key being the behavior information "soccer team A uniform" for a user whose temporary ID is "c4ca4238a0b923820dcc509a6f75849b." When the preference vector for all users is acquired, it is as shown in FIG. 12.

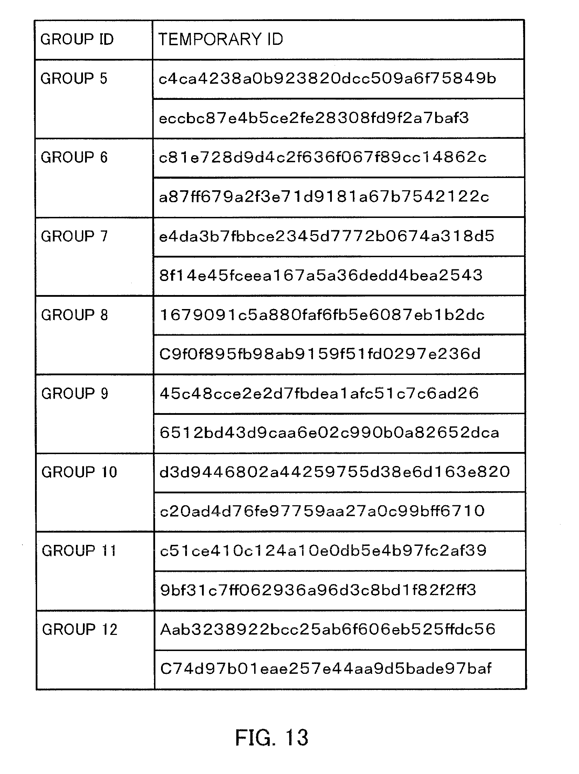

The regroup unit 60 divides the group into two so that the temporary IDs have a high number of matches in the preference vector and attaches the new group ID (S1105). For example, there can be a division into two groups of ("c4ca4238a0b923820dcc509a8f75849b," "eccbc87e4b5ce2fe28308fd9f2a7baf3") and ("c81e728d9d4c2f636f067f89cc14862c," "a87ff679a2f3e71d9181a67b7542122c"), and group IDs "group 5" and "group 6" are respectively assigned to the two groups. In this case, the number of matches in the preference vector is 2 for both of the two groups and is at maximum. When the new group is assigned to all temporary IDs shown in FIG. 12, it is in a state shown in FIG. 13.

Then, the regroup unit 60 determines the preference vector of the new group ID as the common factor in the preference vectors for all temporary IDs (S1106). For example, for the new group of which the group ID is "group 5, "{soccer, soccer team A} is the common factor, and this becomes the preference vector of "group 5."

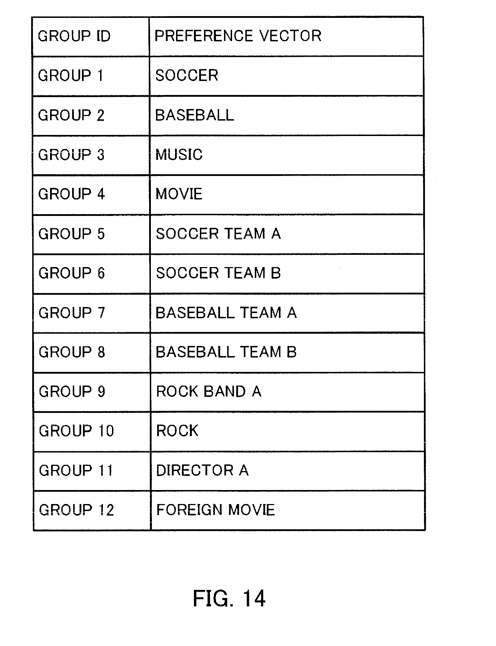

Finally, the regroup unit 60 registers the preference vector for the new group ID in the group information storage unit 56 (S1107). With the addition of the new group ID, the information stored in the group information storage unit 56 is in a state shown in FIG. 14.

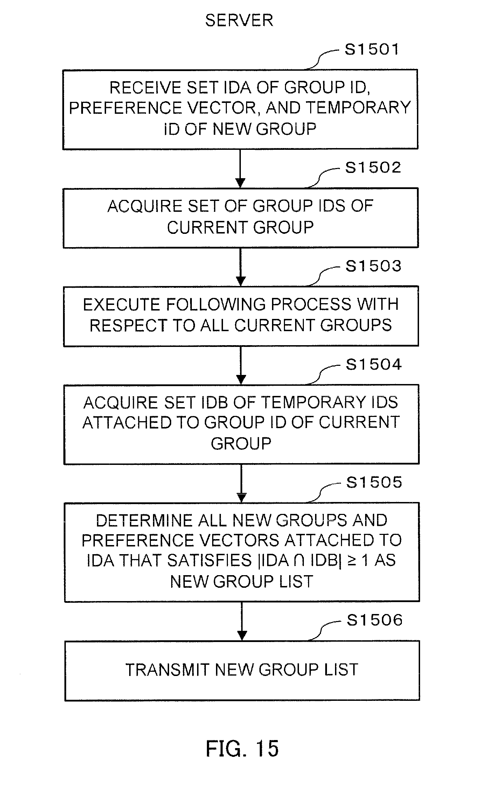

FIG. 15 is a flowchart showing the details of a step (S904) shown in the flowchart in FIG. 9.

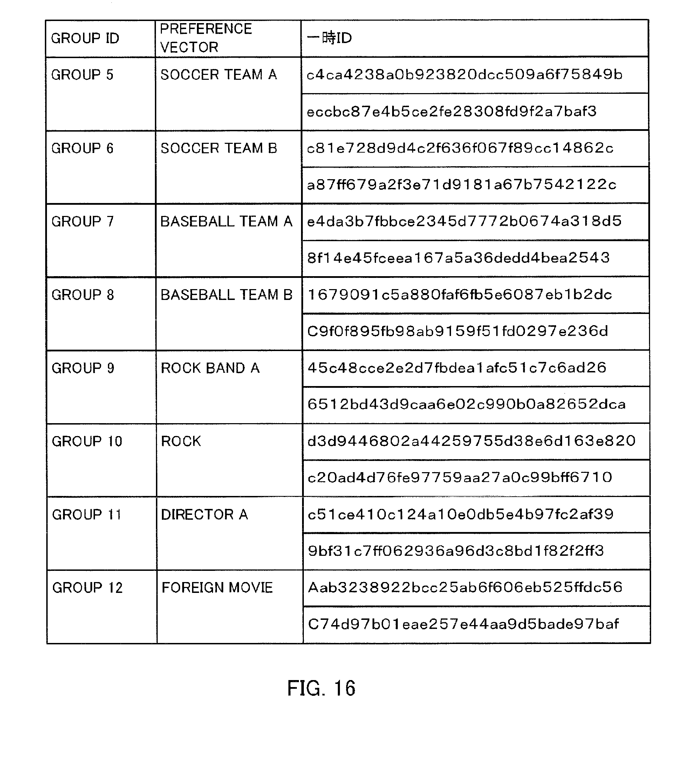

To the new group list transmission unit 62, at least one new group ID and a set IDA of the preference vector and the temporary ID attached to that new group ID are input from the regroup unit 60 (S1501). For example, data to be input is as in FIG. 16.

Further, the new group list transmission unit 62 acquires a set of the current group ID that is the group ID attached to the user ID of the current user from the user information storage unit 54 (S1502). For example, in the case where the information stored in the user information storage unit 54 is in a state shown in FIG. 5, {"group 1," "group 2," "group 3," "group 4"} is acquired.

Then, the new group list transmission unit 62 executes the following steps (S1504 to S1506) for all current groups (S1503). Herein, a specific example of a case where the group ID is "group 1" will be described.

As processing for each of the current group IDs, the new group list transmission unit 62 first acquires a set IDB of the temporary ID attached to the current group ID from the behavior information storage unit 52 (S1504). For example, in the case where the current group ID is "group 1," IDB = {"c4ca4238a0b923820dcc509a6f75849b," "c81 e728d9d4c2f636f067f89cc14862c," "eccbc87e4b5ce2fe28308fd9f2a7baf3," "a87ff679a2f3e71d9181a67b7542122c"} is acquired.

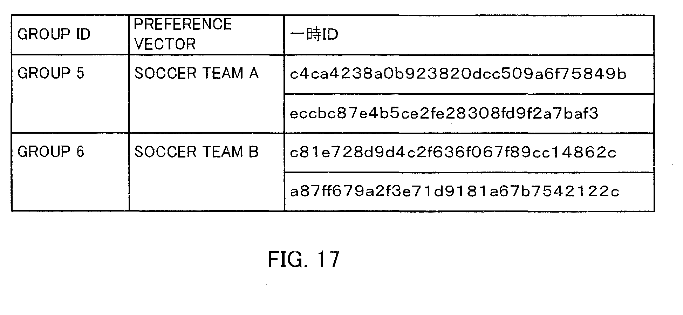

Then, for all new group IDs attached with IDA that satisfies |IDA ∩ IDB| ≥ 1, the new group list transmission unit 62 puts together at least that new group ID and the preference vector attached thereto and determines this set as the new group list (S1505). For example, "group 5" is put on the list since "c4ca4238a0b923820dcc509a6f75849b" is a common factor that is also in "group 1." Then, with a check with respect to all new group IDs, the set of the new group ID becomes {"group 5," "group 6"}, and the new group list in which the preference vector and a temporary ID set attached to the set of that new group ID are put together is as shown in FIG. 17.

Finally, the new group list transmission unit 62 transmits the generated new group list to the user terminal 10 (S1506). Note that the new group list transmission unit 62 may transmit the new group list upon receiving the content request from the user terminal 10, for example. Regarding the group list to be transmitted to the whose user ID is "user 1" in the case where the information stored in the user information storage unit 54 is as shown in FIG. 5, a new group list {("group 5," "soccer team A," {"c4ca4238a0b923820dcc509a6f75849b," "eccbc87e4b5ce2fe28308fd9f2a7baf3"}), ("group 6," "soccer team B," {"c81e728d9d4c2f636f067f89cc14862c," "a87ff679a2f3e71d9181a67b7542122c"})} corresponding to the group 1 is transmitted to the user terminal 10 of "user 1" since that user belongs to "group 1" that is the current group.

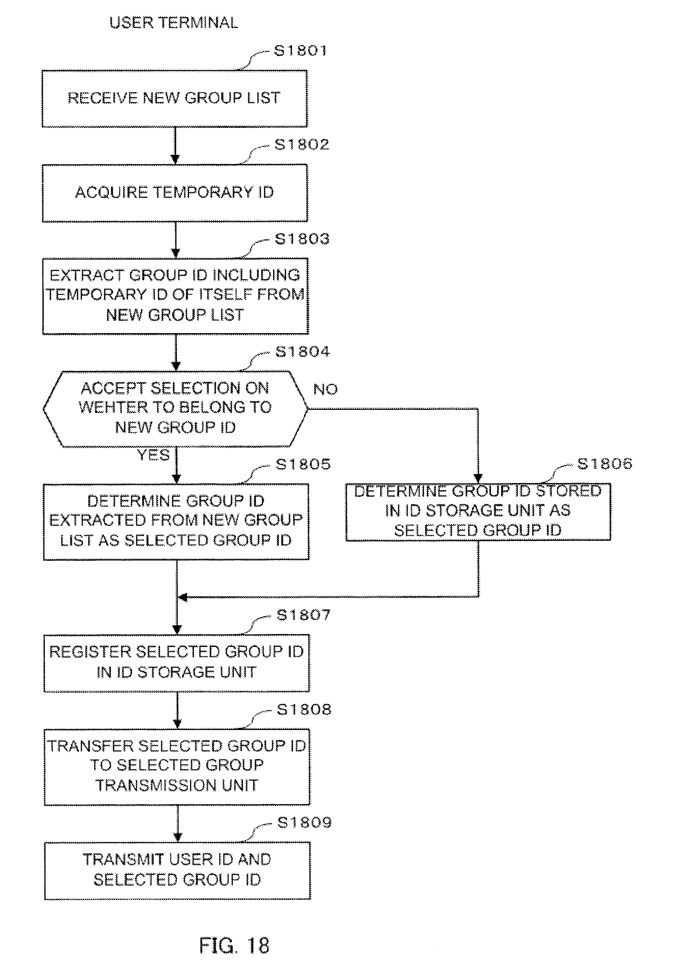

FIG. 18 is a flowchart showing the details of steps (S905 to S907) shown in the flowchart in FIG. 9.

First, the new group list reception unit 40 of the user terminal 10 receives the new group list (S1801). For example, the user terminal 10 of "user 1" receives the new group list {("group 5," "soccer team A," {"c4ca4238a0b923820dcc509a6f75849b," "eccbc87e4b5ce2fe28308fd9f2a7baf3"}), ("group 6," "soccer team B," {"c81e728d9d4c2f636f067f89cc14862c," "a87ff679a2f3e71d9181 a67b7542122c"})} shown in FIG. 17.

Next, the group selection unit 42 acquires the temporary ID of the user from the ID storage unit 30 (S1802). For example, in the case of "user 1," the temporary ID "c4ca4238a0b923820dcc509a6f75849b" is acquired.

The group selection unit 42 checks the temporary ID set attached to each new group ID and extracts, from the new group list, the group ID including the temporary ID of the user of the terminal itself within that temporary ID (S1803). For example, in the case of "user 1," "group 5" including the temporary ID "c4ca4238a0b923820dcc509a6f75849b" is extracted.

Then, the group selection unit 42 lets the user select whether or not the user is to belong to the group of the new group ID (S1804). For example, the group selection unit 42 displays a screen for selecting whether or not the user is to belong to the group of the new group ID and accepts a selection result of the user. The user decides and makes a selection whether it is acceptable for a service provider to know of an interest in "soccer team A" that is the preference vector of "group 5." The group selection unit 42 determines "group 5" as a selected group ID in the case where the user has selected YES (S1805) and determines "group 1" that is the current group as the selected group ID in the case where the user has selected NO (S1806).

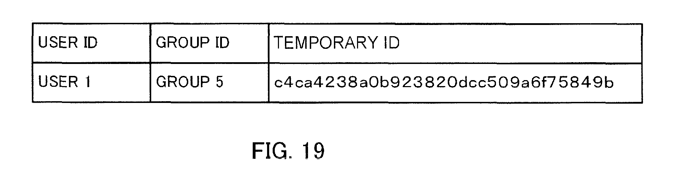

Subsequently, the group selection unit 42 registers the selected group ID in the ID storage unit 30 (S1807). For example, the information stored in the ID storage unit 30 of the user terminal 10 of "user 1" is in a state shown in FIG. 19. Note that the temporary ID stored in the ID storage unit 30 may be changed by the temporary ID generation unit 32 simultaneously with an update of the group ID.

The group selection unit 42 transfers the user ID and the selected group ID to the selected group transmission unit 44 (S1808). Then, the selected group transmission unit 44 transmits the user ID and the selected group ID to the server 20.

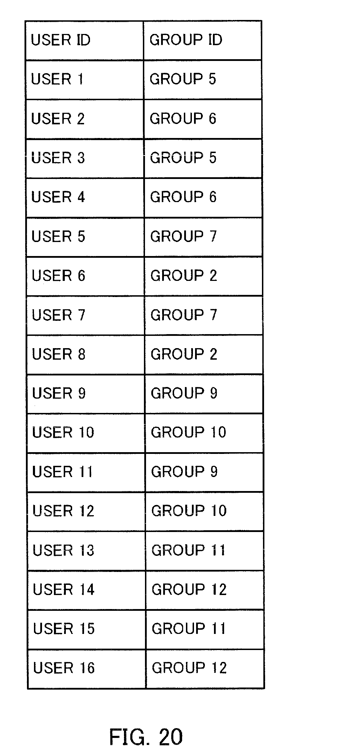

Then, in the server 20, the selected group reception unit 64 receives the user ID and the selected group ID transmitted from the user terminal 10, and the group update unit 66 performs an update of the user information storage unit 54 using the received information. FIG. 20 shows one example of a result of update of the information stored in the user information storage unit 54. This example shows that the users whose user IDs are "user 6" and "user 8" have not selected the new group and have selected to belong to the current group.

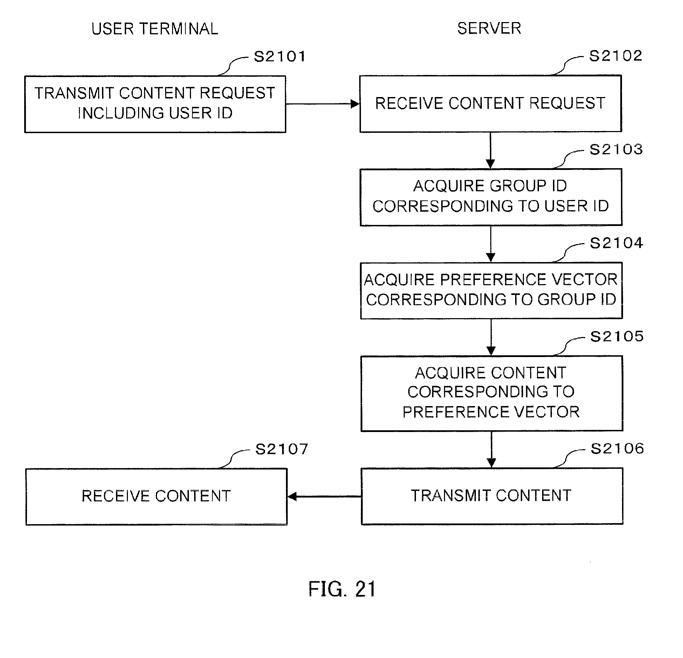

FIG. 21 is a flowchart showing one example of an operation in which content is distributed with respect to the user terminal 10 by the server 20 based on the preference vector attached to a group ID.

First, the content request transmission unit 46 of the user terminal 10 transmits the content request including the user ID to the server 20 (S2101). An example of a case where "user 1" has requested content will be described below.

When the content request reception unit 70 receives the content request (S2102) in the server 20, the distribution content determination unit 72 acquires the group ID attached to the user ID included in the content request from the user information storage unit 54 (S2103). For example, in the case where the information stored in the user information storage unit 54 is in a state shown in FIG. 20 and the user ID is "user 1," "group 5" is acquired.

Subsequently, the distribution content determination unit 72 acquires the preference vector attached to the group ID from the group information storage unit 56 (S2104). For example, in the case where the information stored in the group information storage unit 56 is in a state shown in FIG. 15 and the group ID is "group 5," "soccer team A" is acquired.

Then, content attached to the preference vector is acquired from the content storage unit 68 and determined as the distribution content by the distribution content determination unit 72 (S2105). For example, in the case where the information stored in the content storage unit 68 is in a state shown in FIG. 8 and the preference vector is "soccer team A," "advertisement for soccer team A fans" is acquired as the distribution content.

Finally, the content distribution unit 74 transmits the content determined by the distribution content determination unit 72 to the user terminal 10 that has transmitted the content request (S2106). For example, "advertisement for soccer team A fans" is transmitted to the user terminal 10 of "user 1." Then, the content reception unit 48 of the user terminal 10 receives the content transmitted from the server 20 (S2107).

The embodiment has been described above. With this embodiment, it is possible for the user to control the accuracy of preference analysis performed by the service provider (server 20) based on behavior history information. Specifically, since the configuration is such that the behavior information is attached to the temporary ID that is changeable arbitrarily by the user terminal 10 and transmitted to the server 20 in this embodiment, the behavior information and the user ID can be prevented from being attached for a long period of time in the server 20. Also, it is possible for the user to select which group one is to belong to from the set of the new group ID sent from the server 20 and the current group ID. That is, the user can control the group of which the preference vector is given to oneself. In other words, since the server 20 cannot attach the new group ID generated by the regroup unit 60 and the user ID and the attachment of the new group ID and the user ID is decided and performed by the user, the user can voluntarily control the accuracy of the preference analysis based on the behavior information.

Note that this embodiment is for a better understanding of the present invention and is not to be construed to limit the present invention. The present invention may be modified or improved without departing from the gist thereof, and the present invention also includes equivalents thereof.

This application claims priority to Japanese Patent Application No. 2010-254884 filed on November 15, 2010, the disclosure of which are hereby incorporated in its entirety.

The invention of the present application has been described above with reference to the embodiment. However, the invention of the present application is not limited to the embodiment described above. Various modifications understandable to a person skilled in the art may be made in the configuration or details of the invention of the present application within the scope of the invention of the present application.

A part or all of this embodiment may be set forth as in the following notes but is not limited to the following.

(Note 1) A behavior information collection device includes: a behavior information reception unit configured to receive, from a user terminal, a temporary identifier which is a temporary identifier of a user, a group identifier for identifying a group according to a preference of the user, and behavior information indicating a behavior of the user; a behavior information storage unit configured to store the temporary identifier, the group identifier, and the behavior information received by the behavior information reception unit in association with each other; a group information storage unit configured to store the group identifier and preference information showing a tendency of behavior of a user in association with each other; a user information storage unit configured to store a user identifier which is an identifier of a user and a group identifier of a group to which the user belongs in association with each other; a grouping unit configured to, regarding the temporary identifier and the behavior information stored in the behavior information storage unit, assign a group identifier to a group of temporary identifiers corresponding to behavior information for which preference information matches, and store the group identifier and the preference information in the group information storage unit in association with each other; a group list transmission unit configured to acquire, for each group identifier stored in the behavior information storage unit, a user identifier of a user associated with the group identifier from the user information storage unit and transmit to a user terminal of the user shown by the user identifier, a group list including a plurality of temporary identifiers corresponding to the group identifier, a plurality of group identifiers assigned to the plurality of temporary identifiers, and a plurality of pieces of preference information corresponding to the plurality of group identifiers; a selected group reception unit configured to receive selected group information that is transmitted from the user terminal in accordance with transmission of the group list and includes the user identifier and the group identifier; and a group update unit configured to update the group identifier stored in the user information storage unit based on the user identifier and the group identifier included in the selected group information.

(Note 2) The behavior information collection device according to note 1, further comprising: a content storage unit configured to store the preference information and information showing content distributable to a user terminal in association with each other; a content request reception unit configured to receive a content request including the user identifier from the user terminal; a distribution content determination unit configured to acquire, based on the user identifier included in the content request, a group identifier of the group to which a user shown by the user identifier belongs from the user information storage unit, acquire the preference information corresponding to the group identifier from the group information storage unit, and determine content corresponding to the preference information based on information stored in the content storage unit; and a content distribution unit configured to distribute the content determined by the distribution content determination unit to the user terminal.

(Note 3) A behavior information transmission device comprising: a temporary identifier generation unit configured to generate a temporary identifier which is a temporary identifier of a user; an identifier storage unit configured to store an identifier of the user, the temporary identifier of the user, and a group identifier for identifying a group according to a preference of the user in association with each other; a behavior information storage unit configured to store behavior information indicating a behavior of the user; a behavior information transmission unit configured to transmit, to a behavior information collection device, the behavior information stored in the behavior information storage unit after this behavior information is associated with the temporary identifier and the group identifier stored in the identifier storage unit; a group list reception unit configured to receive, from the behavior information collection device, a group list including a group identifier of a plurality of groups into which the group a user currently belongs to is divided, a plurality of temporary identifiers corresponding to the plurality of groups, and a plurality of pieces of preference information indicating a preference in the plurality of groups; a group selection unit configured to select, according to a user input, which one of a group identifier stored in the identifier storage unit and a group identifier corresponding to the temporary identifier stored in the identifier storage unit out of the plurality of group identifiers included in the group list is to be a group identifier of a group to which a user belongs and update a group identifier stored in the identifier storage unit to the selected group identifier; and a selected group transmission unit configured to transmit the group identifier selected by the group selection unit and the user identifier stored in the identifier storage unit to the behavior information collection device in association with each other.

(Note 4) The behavior information transmission device according to note 3, wherein the temporary identifier generation unit is configured to newly generate the temporary identifier and update the temporary identifier stored in the identifier storage unit, when the group selection unit updates a group identifier stored in the identifier storage unit.

(Note 5) A behavior information transmission device according to note 3 or 4, wherein the temporary identifier generation unit is configured to generate the temporary identifier at a predetermined interval and update the temporary identifier stored in the identifier storage unit.

(Note 6) The behavior information transmission device according to any one of note 3 to 5, wherein the temporary identifier generation unit is configured to generate the temporary identifier based on input data of a user.

(Note 7) A behavior information collection method comprising: receiving, from a user terminal, and storing, in a behavior information storage unit, a temporary identifier which is a temporary identifier of a user, a group identifier for identifying a group according to a preference of the user, and behavior information indicating a behavior of the user; storing the group identifier and preference information showing a tendency of behavior of a user in a group information storage unit in association with each other; storing a user identifier which is an identifier of a user and a group identifier of a group to which the user belongs in a user information storage unit in association with each other; assigning, regarding the temporary identifier and the behavior information stored in the behavior information storage unit, a group identifier to a group of temporary identifiers corresponding to behavior information for which preference information matches and storing the group identifier and the preference information in the group information storage unit in association with each other; acquiring, for each group identifier stored in the behavior information storage unit, a user identifier of a user associated with the group identifier from the user information storage unit and transmitting to a user terminal of a user shown by the user identifier, a group list including a plurality of temporary identifiers corresponding to the group identifier, a plurality of group identifiers assigned to the plurality of temporary identifiers, and a plurality of pieces of preference information corresponding to the plurality of group identifiers; receiving selected group information that is transmitted from the user terminal in accordance with transmission of the group list and includes the user identifier and the group identifier; and updating the group identifier stored in the user information storage unit based on the user identifier and the group identifier included in the selected group information.

(Note 8) A behavior information transmission method comprising: generating a temporary identifier which is a temporary identifier of a user; storing an identifier of the user, the temporary identifier of the user, and a group identifier for identifying a group according to a preference of the user in an identifier storage unit in association with each other; storing behavior information indicating a behavior of the user in a behavior information storage unit; transmitting, to a behavior information collection device, the behavior information stored in the behavior information storage unit after associating the behavior information with the temporary identifier and the group identifier stored in the identifier storage unit; receiving, from the behavior information collection device, a group list including a group identifier of a plurality of groups into which the group a user currently belongs to is divided, the temporary identifier corresponding to the plurality of groups, and a plurality of pieces of preference information indicating a preference in the plurality of groups; selecting, according to a user input, which one of a group identifier stored in the identifier storage unit and a group identifier corresponding to the temporary identifier stored in the identifier storage unit out of the plurality of group identifiers included in the group list is to be a group identifier of a group to which a user belongs and updating a group identifier stored in the identifier storage unit to the selected group identifier; and transmitting the selected group identifier and the user identifier stored in the identifier storage unit to the behavior information collection device in association with each other.

- 10: User terminal
- 20: Server
- 30: ID storage unit
- 32: Temporary ID generation unit
- 34: Behavior information acquisition unit
- 36: Behavior information storage unit
- 38: Behavior information transmission unit
- 40: New group list reception unit
- 42: Group selection unit
- 44: Selected group transmission unit
- 46: Content request transmission unit
- 48: Content reception unit
- 50: Behavior information reception unit
- 52: Behavior information storage unit
- 54: User information storage unit
- 56: Group information storage unit
- 58: Preference vector storage unit
- 60: Regroup unit
- 62: New group list transmission unit
- 64: Selected group reception unit
- 66: Group update unit
- 68: Content storage unit
- 70: Content request reception unit
- 72: Distribution content determination unit
- 74: Content distribution unit

## Claims

1. A behavior information collection device comprising:
a behavior information reception unit configured to receive, from a user terminal, a temporary identifier which is a temporary identifier of a user, a group identifier for identifying a group according to a preference of the user, and behavior information indicating a behavior of the user;
a behavior information storage unit configured to store the temporary identifier, the group identifier, and the behavior information received by the behavior information reception unit in association with each other;
a group information storage unit configured to store the group identifier and preference information showing a tendency of behavior of a user in association with each other;
a user information storage unit configured to store a user identifier which is an identifier of a user and a group identifier of a group to which the user belongs in association with each other;
a grouping unit configured to, regarding the temporary identifier and the behavior information stored in the behavior information storage unit, assign a group identifier to a group of temporary identifiers corresponding to behavior information for which preference information matches, and store the group identifier and the preference information in the group information storage unit in association with each other;
a group list transmission unit configured to acquire, for each group identifier stored in the behavior information storage unit, a user identifier of a user associated with the group identifier from the user information storage unit and transmit to a user terminal of the user shown by the user identifier, a group list including a plurality of temporary identifiers corresponding to the group identifier, a plurality of group identifiers assigned to the plurality of temporary identifiers, and a plurality of pieces of preference information corresponding to the plurality of group identifiers;
a selected group reception unit configured to receive selected group information that is transmitted from the user terminal in accordance with transmission of the group list and includes the user identifier and the group identifier; and
a group update unit configured to update the group identifier stored in the user information storage unit based on the user identifier and the group identifier included in the selected group information.

2. The behavior information collection device according to claim 1, further comprising:
a content storage unit configured to store the preference information and information showing content distributable to a user terminal in association with each other;
a content request reception unit configured to receive a content request including the user identifier from the user terminal;
a distribution content determination unit configured to acquire, based on the user identifier included in the content request, a group identifier of the group to which a user shown by the user identifier belongs from the user information storage unit, acquire the preference information corresponding to the group identifier from the group information storage unit, and determine content corresponding to the preference information based on information stored in the content storage unit; and
a content distribution unit configured to distribute the content determined by the distribution content determination unit to the user terminal.

3. A behavior information transmission device comprising:
a temporary identifier generation unit configured to generate a temporary identifier which is a temporary identifier of a user;
an identifier storage unit configured to store an identifier of the user, the temporary identifier of the user, and a group identifier for identifying a group according to a preference of the user in association with each other;
a behavior information storage unit configured to store behavior information indicating a behavior of the user;
a behavior information transmission unit configured to transmit, to a behavior information collection device, the behavior information stored in the behavior information storage unit after this behavior information is associated with the temporary identifier and the group identifier stored in the identifier storage unit;
a group list reception unit configured to receive, from the behavior information collection device, a group list including a group identifier of a plurality of groups into which the group a user currently belongs to is divided, a plurality of temporary identifiers corresponding to the plurality of groups, and a plurality of pieces of preference information indicating a preference in the plurality of groups;
a group selection unit configured to select, according to a user input, which one of a group identifier stored in the identifier storage unit and a group identifier corresponding to the temporary identifier stored in the identifier storage unit out of the plurality of group identifiers included in the group list is to be a group identifier of a group to which a user belongs and update a group identifier stored in the identifier storage unit to the selected group identifier; and
a selected group transmission unit configured to transmit the group identifier selected by the group selection unit and the user identifier stored in the identifier storage unit to the behavior information collection device in association with each other,

4. The behavior information transmission device according to claim 3, wherein the temporary identifier generation unit is configured to newly generate the temporary identifier and update the temporary identifier stored in the identifier storage unit, when the group selection unit updates a group identifier stored in the identifier storage unit.

5. A behavior information transmission device according to claim 3 or 4, wherein the temporary identifier generation unit is configured to generate the temporary identifier at a predetermined interval and update the temporary identifier stored in the identifier storage unit.

6. The behavior information transmission device according to any one of claims 3 to 5, wherein the temporary identifier generation unit is configured to generate the temporary identifier based on input data of a user.

7. A behavior information collection method comprising:
receiving, from a user terminal, and storing, in a behavior information storage unit, a temporary identifier which is a temporary identifier of a user, a group identifier for identifying a group according to a preference of the user, and behavior information indicating a behavior of the user;
storing the group identifier and preference information showing a tendency of behavior of a user in a group information storage unit in association with each other;
storing a user identifier which is an identifier of a user and a group identifier of a group to which the user belongs in a user information storage unit in association with each other;
assigning, regarding the temporary identifier and the behavior information stored in the behavior information storage unit, a group identifier to a group of temporary identifiers corresponding to behavior information for which preference information matches and storing the group identifier and the preference information in the group information storage unit in association with each other;
acquiring, for each group identifier stored in the behavior information storage unit, a user identifier of a user associated with the group identifier from the user information storage unit and transmitting to a user terminal of a user shown by the user identifier, a group list including a plurality of temporary identifiers corresponding to the group identifier, a plurality of group identifiers assigned to the plurality of temporary identifiers, and a plurality of pieces of preference information corresponding to the plurality of group identifiers;
receiving selected group information that is transmitted from the user terminal in accordance with transmission of the group list and includes the user identifier and the group identifier; and
updating the group identifier stored in the user information storage unit based on the user identifier and the group identifier included in the selected group information.

8. A behavior information transmission method comprising:
generating a temporary identifier which is a temporary identifier of a user;
storing an identifier of the user, the temporary identifier of the user, and a group identifier for identifying a group according to a preference of the user in an identifier storage unit in association with each other;
storing behavior information indicating a behavior of the user in a behavior information storage unit;
transmitting, to a behavior information collection device, the behavior information stored in the behavior information storage unit after associating the behavior information with the temporary identifier and the group identifier stored in the identifier storage unit;
receiving, from the behavior information collection device, a group list including a group identifier of a plurality of groups into which the group a user currently belongs to is divided, the temporary identifier corresponding to the plurality of groups, and a plurality of pieces of preference information indicating a preference in the plurality of groups;
selecting, according to a user input, which one of a group identifier stored in the identifier storage unit and a group identifier corresponding to the temporary identifier stored in the identifier storage unit out of the plurality of group identifiers included in the group list is to be a group identifier of a group to which a user belongs and updating a group identifier stored in the identifier storage unit to the selected group identifier; and
transmitting the selected group identifier and the user identifier stored in the identifier storage unit to the behavior information collection device in association with each other.
